# EUROPEAN PATENT APPLICATION

(11) **EP 1 589 399 A1**
(43) Date of publication of application: **26.10.2005**
(21) Application number: 05252504.5
(22) Date of filing: 21.04.2005
(51) Int. Cl.: G06F 1/00

(54) **Device controller generating virtual cryptographic devices**

(30) Priority: 23.04.2004 US 831477
(71) Applicant: Hewlett-Packard Development Company, L.P., Houston, TX 77070 (US)
(72) Inventor: Ali, Valiuddin Y., Houston, Texas 77069 (US); Ibrahim, Wael M., Cypress, Texas 77429 (US); Novoa, Manuel, Cypress, Texas 77433 (US)
(74) Representative: Powell, Stephen David

(57) **Abstract**

A computer security system (10) comprises a physical cryptographic device (12) and device controller (18). The device controller (18) is adapted to generate a virtual cryptographic device (30) from the physical cryptographic device (12) to enable logical use of the physical cryptographic device (12) via the virtual cryptographic device (30).

## Description

The present invention relates generally to the field of computer systems and, more particularly, to a computer security system and method.

A cryptographic device (e.g., a security or trusted platform module) is a device used to store, process, encrypt/decrypt, and/or manage access rights to secure information and/or otherwise provide secure data functions. However, in a networked, public or shared computer environment, each user and/or application may desire different cryptographic device settings. Changing or resetting particular settings for a cryptographic device requires a computer re-boot operation or that a new user or application session be established. For example, if one user desires to disable a cryptographic device or a particular setting for a cryptographic device, another user must generally re-boot the computer system or initiate a new user session to enable the previously disabled cryptographic device or setting, thereby resulting in repeated re-boot or resetting operations for modifying cryptographic device settings or maintaining different cryptographic device settings for different users or applications.

In accordance with one embodiment of the present invention, a computer security system comprises a cryptographic device and a device controller. The device controller is a physical cryptographic device and a device controller. The device controller is adapted to generate a virtual cryptographic device from the physical cryptographic device to enable logical use of the physical cryptographic device via the virtual cryptographic device.

In accordance with another embodiment of the present invention, a computer security method comprises receiving a request to access a physical cryptographic device and automatically creating a virtual cryptographic device to enable logical use of the physical cryptographic device via the virtual cryptographic device.

For a more complete understanding of the present invention and the advantages thereof, reference is now made to the following descriptions taken in connection with the accompanying drawings in which:

FIGURE 1 is a diagram illustrating an embodiment of a computer security system in accordance with the present invention;

FIGURE 2 is a diagram illustrating another embodiment of a computer security system in accordance with the present invention;

FIGURE 3 is a diagram illustrating a further embodiment of a computer security system in accordance with the present invention; and

FIGURE 4 is a flow diagram illustrating an embodiment of a computer security method in accordance with the present invention.

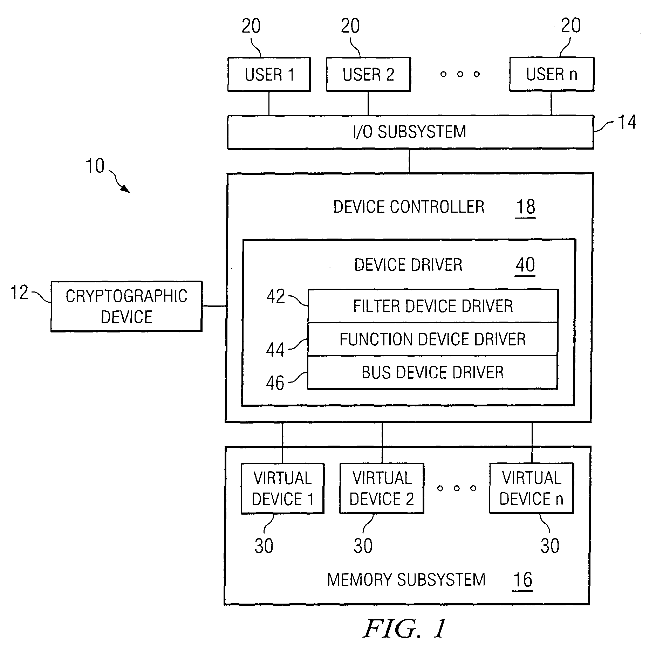

The preferred embodiments of the present invention and the advantages thereof are best understood by referring to FIGURES 1-4 of the drawings, like numerals being used for like and corresponding parts of the various drawings.

FIGURE 1 is a diagram illustrating an embodiment of a computer system 10 in accordance with the present invention. Briefly, system 10 provides for logical use of a physical cryptographic device, such as, but not limited to, a trusted platform module, for each user or application desiring to access or otherwise perform operations associated with the cryptographic device. Embodiments of the present invention provide each user or application with an independent view of the cryptographic device relative to other users and/or applications. In accordance with some embodiments of the present invention, the logical view of the cryptographic device is preserved across user and/or application sessions and boot cycles, thereby maintaining independent device settings and assigned policies for each user of the cryptographic device.

In the embodiment illustrated in FIGURE 1, system 10 comprises a cryptographic device 12, an input/output (I/O) subsystem 14, a memory subsystem 16, and a device controller 18. Cryptographic device 12 represents a physical cryptographic device which may be implemented as hardware, software, or a combination of hardware and software, and which may comprise any type of security device such as, but not limited to, a trusted platform module, for providing security functions such as, but not limited, storage and use of encryption/decryption keys, encryption/decryption functions, authentication operations, and/or key exchange or generation. I/O subsystem 14 may comprise any type of system for receiving, outputting, and/or otherwise processing I/O requests associated with users of system 10. For example, I/O subsystem 14 may comprise a shared software stack or other type of hardware and/or software component to enable single or multiple use of system 10. For example, as illustrated in the embodiment of FIGURE 1, "n" users 20 may be individually and/or simultaneously active on system 10 via I/O subsystem 14.

Device controller 18 may comprise software, hardware, or a combination of hardware and software. In operation, device controller 18 communicates with cryptographic device 12 and generates "n" virtual cryptographic devices 30 for "n" quantity of users 20. Each virtual device 30 represents a logical view of cryptographic device 12 maintained through memory subsystem 16 by device controller 18. In operation, device controller 18 maps attributes of cryptographic device 12 to each virtual device 30 such that a logical state of cryptographic device 12 for each user 20 is available for each user 20 via a corresponding virtual device 30.

In the embodiment illustrated in FIGURE 1, device controller 18 comprises a device driver 40 for representing a "logical" state or view of cryptographic device 12 for each user 20 currently accessing or otherwise utilizing system 10. In operation, device driver 40 maps logical attributes of cryptographic device 12 over a set of physical attributes of cryptographic device 12 and provides the logical attributes of cryptographic device 12 to each user 20 via a corresponding virtual device 30. In the embodiment illustrated in FIGURE 1, device driver 40 comprises a filter device driver 42, a function device driver 44, and a bus device driver 46.

In operation, filter device driver 42 intercepts and/or otherwise receives I/O requests intended for cryptographic device 12 via function device driver 44. Filter device driver 42 identifies a particular user 20 associated with the I/O request (e.g., identification of user session identification (ID)). If the I/O request is associated with a "new" user 20 accessing system 10, filter device driver 42 generates or otherwise creates virtual device 30 for the new user 20. Filter device driver 42 re-directs the I/O request to the corresponding virtual device 30 associated with the user 20. To create a new virtual device 30 for a new user 20, function device driver 44 communicates with cryptographic device 12 via bus device driver 46 and maps settings associated with cryptographic device 12 to a new virtual device 30 for the new user 20. The virtual device 30 is coupled to filter device driver 42 via function device driver 44 such that the I/O request is directed to the corresponding virtual device 30 created for the particular user 20.

In some embodiments, device controller 18 is also configured to store in memory subsystem 16 settings of virtual devices 30 associated with each user 20 such that upon initiation of a new session on system 10 by a particular user 20, device controller 18 accesses memory subsystem 16 and retrieves settings for a particular virtual device 30 associated with the particular user 20. Thus, in some embodiments, device controller 18 is configured to control a duration of settings applied to or otherwise associated with virtual devices 30. For example, in some embodiments, device controller 18 is configured to maintain a duration of settings for virtual devices 30 to extend to future sessions by accessing memory subsystem 16 and retrieving and/or applying the stored settings to particular virtual devices 30. In other embodiments, device controller 18 is configured to maintain a duration of settings for virtual devices 30 for only a current session. I/O requests received from user 20 are directed by filter device driver 42 to the corresponding virtual device 30 associated with the user 20.

Thus, device controller 18 provides a logical view of cryptographic device 12 capabilities via a corresponding virtual device 30 for each user 20. For example, one such cryptographic device 12 attribute or setting is an "on/off" state of cryptographic device 12. Device controller 18 maintains a physical "on/off" state of cryptographic device 12 and presents a logical view of the physical "on/off" state for each virtual device 30. For virtual devices 30 that are maintained as being in an "on" state, device controller 18 enables operations associated with or provided by cryptographic device 12 via each virtual device 30. Thus, commands that affect logical states of cryptographic device 12 are maintained by device controller 18. For a request to maintain an "off' physical setting of cryptographic device 12, device controller 18 changes the logical state of a corresponding virtual device 30 to an "off" setting independent of states of other virtual devices 30. Thus, for a particular user 20 maintaining an associated virtual device 30 in an "off" state, the particular user 20 is presented with a series of attributes consistent with cryptographic device 12 being in an "off" state. However, each other user 20 will maintain independent settings via virtual devices 30 corresponding to each of the other users 20. Thus, commands for cryptographic processing from a particular user 20 having virtual device 30 setting in an "off" state are processed by device controller 18 as if cryptographic device 12 was in an "off" state (e.g., commands are processed as if device 12 is in an "off' state even though the state of device 12 is "on''). Additionally, policies for controlling available settings of cryptographic device 12 via corresponding virtual devices 30 may be implemented and/or enforced via filter device driver 42, function device driver 44, and/or another software and/or hardware component such that logical states available via virtual device(s) 30 are maintained independently for each virtual device 30.

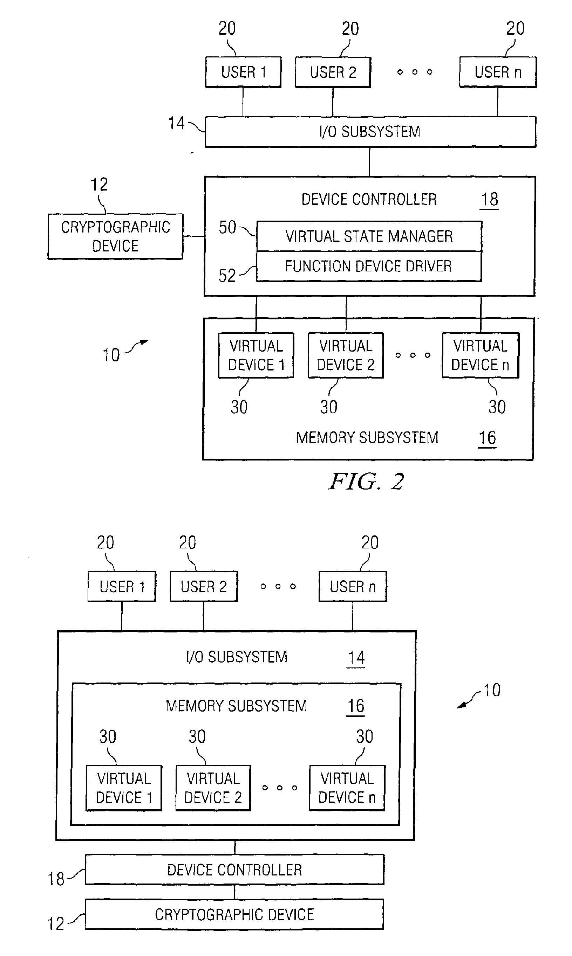

FIGURE 2 is a diagram illustrating another embodiment of computer security 10 in accordance with the present invention. In the embodiment illustrated in FIGURE 2, device controller 18 comprises a virtual state manager 50 and a function device driver 52. In the embodiment illustrated in FIGURE 2, function device driver 52, upon initialization, determines "n" possible users 20 of system 10. Information associated with "n" possible users 20 may be obtained through registries or other means. Function device driver 52 allocates and initializes a device extension representing the "n" states of cryptographic device 12 for each of the "n" users 20. For subsequent loading of device driver 52 (e.g., subsequent re-boots), device driver 52 initializes each of the virtual devices 30 corresponding to "n" users 20 through data stored in memory subsystem 16 by device driver 52 at the end of the "driver load cycles" (e.g., through the re-boot of the system). I/O subsystem 14, such as a shared or common software stack, is initialized per user 20 via .loading of cryptographic device 12. In a shared or common software stack I/O subsystem 14, the I/O subsystem 14 registers itself with device driver 52 as being part of a particular user 20. Device driver 52 then associates a portion of I/O subsystem 14 for a particular user 20 with a particular device extension and returns an identifier to I/O subsystem 40. This identifier (e.g., a cookie or other type of identifier) identifies I/O requests from a particular user 20 to enable device driver 52 to map a particular user 20 with a particular virtual device 30. Thus, I/O requests made by a particular user 20 are re-directed to a corresponding virtual device 30 associated with the particular user 20. Thus, virtual state manager 50 represents, creates, and maintains the "n" virtual states of cryptographic device 12 via a virtual mapping of the logical state on top of a physical state of cryptographic device 12.

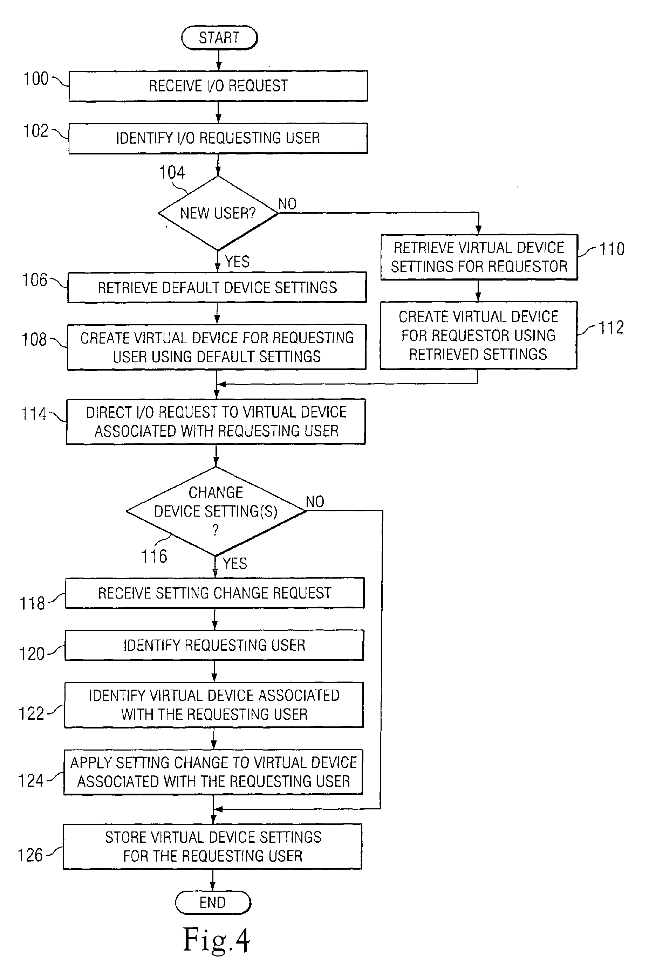

FIGURE 3 is a diagram illustrating another embodiment of computer security 10 in accordance with the present invention. In the embodiment illustrated in FIGURE 3, I/O subsystem 14 (e.g., shared software stack) is configured to be multi-user aware (e.g., via a virtual state manager or otherwise) such that logical states of cryptographic device 12 are maintained for each of "n" quantity of users 20 via memory subsystem 16 with "n" corresponding virtual devices 30. Thus; in the embodiment illustrated in FIGURE 3, I/O requests intended for cryptographic device 12 are directed to a virtual device 30 created by device controller 18 corresponding to the user 20 originating the I/O request. It should be understood that a variety of methods may be used to configure system 10 in accordance with embodiments of the present invention such as, but not limited to, a kernel mode application (as illustrated in FIGURES 1 and 2) or a user mode application (as illustrated in FIGURE 3).

FIGURE 4 is a flowchart illustrating an embodiment of a computer security method in accordance with the present invention. The method begins a block 100, where I/O subsystem 14 receives an I/O request from one of users 20. At block 102, device controller 18 identifies the I/O request as being associated with the particular user 20. At decisional block 104, device controller 18 determines whether the user 20 issuing or otherwise initiating the I/O request is a new user 20 or is otherwise establishing a new system 10 session. If the I/O request is associated with a new user 20 or new user 20 session, the method proceeds to block 106, where device controller 18 communicates with cryptographic device 12 and retrieves default cryptographic device 12 settings. At block 108, device controller 18 creates a virtual device 30 for the requesting user 20 using default cryptographic device 12 settings. If the I/O request is not associated with a new user 20 or new user 20 session, the method proceeds to block 110, where device controller 18 retrieves virtual device 30 settings stored in memory subsystem 16 associated with the particular user 20. At block 112, device controller 18 creates the virtual device 30 for the particular user 20 using retrieved settings from memory subsystem 16.

At block 114, device controller 18 re-directs the I/O request to the corresponding virtual device 30 associated with the requesting user 20. At decisional block 116, a determination is made whether the user 20 desires a change to cryptographic device 12 settings. If the user 20 desires a change to cryptographic device 12 settings, the method proceeds to block 118, where device controller 18 receives the cryptographic device 12 setting change request. At block 120, device controller 18 identifies the user 20 requesting the cryptographic device 12 setting change.

At block 122, device controller 18 identifies the virtual device 30 associated with the requesting user 20. At block 124, device controller 18 applies the requested setting change to virtual device 30 associated with the requesting user 20. At block 126, device controller 18 stores the virtual device 30 settings for the requesting user 20 in memory subsystem 16. At decisional block 116, if a change to cryptographic device 12 settings is not desired, the method proceeds from decisional block 116 to block 126, where device controller 18 stores virtual device 30 settings for the user 20.

Embodiments of the present invention enable settings associated with cryptographic device 12 to be logically enabled and/or disabled independently for each user 20 by providing a logical representation or view of cryptographic device 12 for each user 20 via corresponding virtual devices 30. Thus, in shared or multi-user computer environments, each user 20 may enable and/or disable particular cryptographic device 12 settings independently of other users 20. Further, embodiments of the present invention enable a change to a cryptographic device setting via virtual device 30, thereby alleviating a system re-boot operation for new user session initiation.

Embodiments of the present invention may be implemented in software and can be adapted to run on different platforms and operating systems. In particular, functions implemented by system 10, such as functions implemented or otherwise performed by device controller 18, may be provided as an ordered listing of executable instructions that can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. In the context of this document, a "computer-readable medium" can be any means that can contain, store, communicate, propagate or transport the program for use by or in connection with the instruction execution system, apparatus, or device. The computer-readable medium can be, for example, but is not limited to, an electronic, magnetic, optical, electro-magnetic, infrared, or semi-conductor system, apparatus, device, or propagation medium.

It should also be understood that in other embodiments of the method described in FIGURE 4, certain functions may be omitted, combined, or accomplished in a sequence different than depicted in FIGURE 4. Also, it should be understood that the method depicted in FIGURE 4 may be altered to encompass any of the other features or aspects described elsewhere in the specification.

## Claims

1. A computer security system (10), comprising:
a physical cryptographic device (12); and
a device controller (18) adapted to generate a virtual cryptographic device (30) from the physical cryptographic device (12) to enable logical use of the physical cryptographic device (12) via the virtual cryptographic device (30).

2. The system (10) of Claim I, wherein the device controller (18) generates a respective virtual cryptographic device (30) for each user (20) requesting access to the physical cryptographic device (12).

3. The system (10) of Claim 1, wherein the device controller (18) is adapted to redirect a request directed to the physical cryptographic device (12) to the virtual cryptographic device (30).

4. The system (10) of Claim 1, wherein the device controller (18) is adapted to automatically identify a cryptographic device setting for a user (20) to apply to the virtual cryptographic device (30).

5. The system (10) of Claim 1, wherein the device controller (18) is adapted to automatically apply a physical cryptographic device setting for a user (20) to the virtual cryptographic device (30) associated with the user (20).

6. The system (10) of Claim 1, wherein the device controller (18) is adapted to maintain a virtual cryptographic device setting for a user (20) independent of a virtual cryptographic device setting for another user (20).

7. The system (10) of Claim 1, wherein the device controller (18) comprises a device driver (40).

8. The system (10) of Claim 1, wherein the device controller (18) comprises a virtual state manager (50).

9. The system (10) of Claim 1, wherein the device controller (18) is adapted to control a duration of a virtual cryptographic device setting for the virtual cryptographic device (30).

10. The system (10) of Claim 1, wherein the device controller (18) is adapted to modify a setting of the virtual cryptographic device (30) independent of a corresponding setting of the physical cryptographic device (12).
